# EUROPEAN PATENT APPLICATION

(11) **EP 1 241 811 A2**
(43) Date of publication of application: **18.09.2002**
(21) Application number: 02405169.0
(22) Date of filing: 06.03.2002
(51) Int. Cl.: H04B 10/207

(54) **Optical cable modem**

(30) Priority: 13.03.2001 CH 4632001
(71) Applicant: EMC Electronic Media Communication S.A., 6501 Bellinzona (CH)
(72) Inventor: Marcionetti, Raffaello, 6714 Semione (CH); Franscini, Giovanni, 6710 Biasca (CH); Tonini, Andrea, c/o EMC Elect. Media Com. S.A., 6501 Bellinzona (CH)
(74) Representative: Fiammenghi-Domenighetti, Delfina

(57) **Abstract**

An optoelectronic device can be used by cable modems and cable modem termination systems (CMTS) for digital transmission according to the MCNS/DOCSIS, EuroDOCSIS, DVB/DAVIC or IEEE 802.14 MAC protocols. An optical digital transceiver can be used to transmit the digital signal via an optical fibre network to the subscriber's home (FTTH). A digital electronic circuit implements the physical layer of the MCNS/DOCSIS, EuroDOCSIS, DVB/DAVIC or IEEE 802.14 standards by providing digital processing of the data for the purposes of error correction and distribution of the spectral emissions.

## Description

The present invention is applicable to the technical field of distributing digital signals by means of CATV-type telecommunications networks. It relates to an adaptation of the MCNS/DOCSIS, EuroDOCSIS, DVB/DAVIC or IEEE 802.14 standards to CATV networks of the FTTH (Fibre to the Home) and FTTD (Fibre to the Desk) types. More particularly, it consists of an optoelectronic device which implements the functions of a cable modem and a cable modem termination system (CMTS) in the standards cited above.

At the present time, virtually all television signal distribution networks use a system of data transmission via coaxial cables. The use of this data transmission system has highlighted critical areas and problems of a technical nature present in the distribution network. The critical areas are seen particularly in the noise accumulated in the return channel, in the perturbations entering via insufficiently screened coaxial cabling and in the restriction of bandwidth. One solution to the aforesaid problems is to provide optical fibre cables up to the subscriber's home. This solution has the advantage of allowing a high data transmission capacity. The object of the present invention was therefore to adapt signals handled by MCNS/DOCSIS, EuroDOCSIS, DVB/DAVIC or IEEE 802.14 cable modems and CMTS (cable modem termination systems) to the optical fibre transmission medium, without causing any change in the MAC protocol used by these systems for transmission via coaxial cable. The presence of the optical fibre having a virtually infinite bandwidth permits a considerable simplification of the physical layer of the present cable modem and CMTS systems, with the elimination of the costly and complex RF modulation and encoding processing, but with the retention of the MAC access protocol specified for networks of the hybrid coaxial/fibre type, which has proved to be suitable for networks having the same architecture and dimensions as the existing CATV networks. At present, there is no protocol for the optical transmission of a signal from the peripheral nodes to the central node of a tree network extending over several tens of kilometres. The adaptation of the MCNS/DOCSIS, EuroDOCSIS, DVB/DAVIC or IEEE 802.14 MAC protocols to a physical layer of the digital type with a PMD (physical media dependent) interface of the optical type makes it possible to use this network configuration. The advantages of the present invention are found in the performance, since the bandwidth available to each individual subscriber is increased, with full use of the transmission capacity of the optical fibre medium; in the cost and simplicity of the system, since the hardware interface with the transmission medium is simplified with the elimination of the part for adaptation to the coaxial cable; and in the compatibility with the MAC network and higher layers in the OSI stack. A further advantage is the possibility of simple and immediate adaptation of the MAC layer to a physical layer of the DWDM (dense WDM) or CWDM (coarse WDM) type, with the possibility of providing wavelength routing.

In the course of the present description and the claims, the expression «MCNS/DOCSIS, EuroDOCSIS, DVB/DAVIC or IEEE 802.14 standards» will be summarized by the phrase «cable modem standards» for the sake of convenience. In fact, the invention in question relates solely to the physical layers of the aforesaid protocols, and is therefore adaptable to each of them.

The basic principle of the process and the equipment according to the invention is that of using the MAC (Medium Access Control) protocol, specified by the cable modem standards, for the management of access and conflicts, and adapting this by means of a suitable digital interface to an all-optical CATV network of the FTTH (Fibre to the Home) or FTTD (Fibre to the Desk) type. This concept implies the aim of leaving unchanged the software processes and physical devices that govern the MAC layer and higher layers of the OSI stack, while designing and constructing an optoelectronic device for interfacing between the MAC layer and the optical fibre network. This interface will form the physical layer for the optical fibre cable modem standards. At the present time, the physical layer of the cable modem standards is specified and present only for transmission via coaxial cables, where it transmits signals of the analog type. In the coaxial cable, the physical layer is designed to convert the digital signals, produced by the user or network interface, to analog signals, by means of the encoding and processing required by this conversion. The said optoelectronic device transmits and receives signals of the digital type on the optical fibre network, and can implement a cable modem or a cable modem termination system, using the same physical layer. It takes the form of an electronic circuit card comprising:
a) An optical fibre input.
b) An optical fibre output.
c) One or more interfaces for the CPE (Customer Premise Equipment) unit in the cable modem implementation. One or more network interfaces in the cable modem termination system (CMTS) implementation. The said one or more interfaces for the CPE unit enable the said electronic circuit card to be connected to the user interface. In a first embodiment, these interfaces are of the Ethernet 10BaseT type. In other embodiments, they can be of the USB, PCI, or IEEE 1394 type. Preferably, the said one or more interfaces for the CPE unit are of different types on the same card, to permit different types of connection to the user interface. The said one or more network interfaces enable the said electronic circuit card to be connected to additional data networks. These interfaces are of the 10BaseT, 100BaseT or ATM on SDH type, according to the type of network with which the CMTS is to be interfaced. Preferably, the said one or more network interfaces are of different types, to permit interfacing with different types of network.
d) An electronic MAC (Medium Access Control) controller according to one or more of the cable modem standards. The said electronic MAC controller is preferably a single electronic chip that can implement all the MAC layer functions of systems of the cable modem or cable modem termination system type. Preferably, the said electronic MAC controller is of the programmable type and of the universal type, in other words adaptable to all the protocols of the cable modem standards. In a second embodiment, the said electronic MAC controller can be assisted by an external microprocessor in executing its functions.
e) A microprocessor interface, enabling some functions of the said electronic MAC controller, the digital optical transceiver and the cable modem digital physical layer, specified in subsequent paragraphs, to be programmed by means of the said external microprocessor. It comprises a Bus Interface Unit (BIU) and a set of registers for storing the data to be processed.
f) A digital electronic circuit called the «cable modem digital physical layer». The said cable modem digital physical layer consists of:
   - An MII (Media Independent Interface) for connection to the said electronic MAC controller.
   - A synchronizing circuit: the bits forming the input data are locked to an external or internal clock, according to the operating mode, and an upstream frame clock (for the upstream transmitter in the case of a cable modem) and a downstream frame clock (for the downstream transmitter in the case of a CMTS) are also generated, the term «upstream» denoting the data stream travelling from the subscriber to the exchange and the term «downstream» denoting the data stream travelling from the exchange to the subscriber.
   - One or more electronic multiplexers and demultiplexers, for converting the bit stream from serial to parallel and from parallel to serial respectively. The said conversion is essential for the operations of encoding, decoding and scrambling data in both transmission and reception.
   - An encoder and a decoder, used, respectively, for the operations of encoding the bits in the data transmission phase and decoding in the data reception phase, in order to check for errors and facilitate the locking to the clock; the said encoder and decoder carry out different types of encoding according to the operating bit rate of the said cable modem physical layer. Preferably, the encoding is of the «Manchester» type for a bit rate of 10 Mb/s, of the 4B5B type for a bit rate of 100 Mb/s and of the 8B10B type for a bit rate of 1 Gb/s. In a possible embodiment, where the bit rate is less than 10 Mb/s an encoding of the Reed-Solomon type is carried out, this being compatible with the encoders and decoders found at the present time in burst transmitters and receivers of commercially available cable modems and cable modem termination systems.
   - A scrambler and a descrambler, for distributing the emission spectrum of the electromagnetic disturbances over a band without strong spectral components (scrambler) and recovering the digital signal in the encoding preceding the scrambling operation in the reception phase (descrambler).
   - A transceiver interface for connection to the digital optical transceiver which is described in the following section.
g) A digital optical transceiver consisting of an optical transmitter, which in turn consists of an optical source connected to the said optical fibre output and a controller of the optical source for controlling the optical output power, an optical receiver consisting of a photodiode connected to the said optical fibre input with a corresponding preamplifier, an electronic clock and data recovery circuit for extraction of the clock and electronic regeneration of the stream of digital data leaving the said optical receiver. The said optical transmitter and the said photodiode with the corresponding amplifier make up the PMD (physical media dependent) layer of the physical layer of the cable modem standards, adapted to an optical fibre network, and are responsible for sending and receiving the network signals directly to and from the optical fibre. The said optical transmitter has two characteristics which distinguish it from digital optical transmitters of protocols such as Ethernet or Fiber Channel. The first characteristic is that the said optical source controller has an electrical input to which is applied a digital signal which can switch the said optical source on and off. The said electrical input is connected to an electrical output of the said electronic MAC controller. The said electrical output transmits the said digital signal which switches on the said optical source in synchronization with the packet to be transmitted. Preferably, the said digital signal is an electrical voltage level which switches from a high to a low value, and vice versa. It should be noted that the MAC protocols of the cable modem standards are synchronous in the sense that the individual cable modems can transmit only in the presence of time packets allocated by the CMTS (cable modem termination system) in TDMA (time division mode access). Therefore, if no data packets are being transmitted, the said optical source is switched off, making it possible to transmit via optical networks with a tree topology. The second characteristic is the presence of a wavelength identification number in the optical radiation emitted by the said optical transmitter. The said wavelength identification number does not require a modification of the MAC layer, since it replaces the RF channel identification number used by conventional cable modems working with a division of the FDMA (frequency division mode access) type. At the physical layer, the said wavelength identification number is a binary number stored in a suitable set of registers, and corresponding to the wavelength of the radiation emitted by the said optical source. The said binary number can be programmed externally by acting on the cable modem by means of a microprocessor interface, or can be selected by the CMTS which dynamically allocates the optical frequencies of the cable modems to which it is connected, by means of the corresponding electronic MAC controllers. In a preferred embodiment, the said wavelength of the radiation emitted by the said optical source can be varied by using a laser of the tunable type as the optical source. This configuration enables the protocols specified by the cable modem standards to be adapted to a CWDM (coarse wavelength division multiplexing) optical network. If WDM multiplexing is used, rather than the FDMA type used at present, the channels can be multiplexed over a practically unlimited bandwidth such as that of optical fibre, and therefore the number of subscribers associated with each individual node can be expanded, with consequent optimization of the exploitation of the transmission medium. The present invention has the further advantage of simplifying the electronic circuits of the present modems, since digital transmission requires neither the QAM and QSPK encoding of the data stream, nor the digital/analog or analog/digital conversion. At the same time, since digital signals are more robust than analog signals, the error correction coding can be simplified by changing from Reed-Solomon coding to 4B5B, 8B10B or Manchester coding, according to the bit rates to be handled. This makes it possible to use electronic circuits which are more widespread and more economical, since they have already been used for some time in Ethernet networks. However, the MAC layer remains as specified by the cable modem standards, thus making it possible to use currently available hardware and software approved for medium-sized networks with tree topology. The advantage of this topology is that it can be expanded in a simple and economical way, and that it is entirely passive, thus reducing the cost per subscriber.

These and other advantages of the invention will now be illustrated with reference to embodiments represented by way of example and without restrictive intent in the attached drawings and tables, in which
- Table 1 is a representation, according to the present DOCSIS 1.X and IEEE 802.14 standards of the MCNS (Multimedia Cable Network System Partners Ltd) and IEEE 802.14 working groups, of the complete OSI stack (Table 1A) and the same OSI stack of Table 1A modified by the insertion of the optical physical layer according to the invention (Table 1B);
- Fig. 1 is a schematic representation of a first type of all-optical CATV network topology in which the invention can be included;
- Fig. 2 is a schematic representation of a second type of all-optical CATV network topology into which the invention can be fitted;
- Fig. 3 is a schematic representation of a first embodiment of the complete optoelectronic device according to the invention;
- Fig. 4 is a schematic representation of an embodiment of the encoder included in the optoelectronic device according to the invention;
- Fig. 5 is a schematic representation of an embodiment of the decoder included in the optoelectronic device according to the invention;
- Fig. 6 is a schematic representation of an embodiment of the said digital optical transceiver included in the optoelectronic device according to the invention.

The different characteristics introduced into the OSI stack according to the invention will now be described with the aid of Table 1A, which relates to the OSI structure of the DOCSIS 1.X standards according to the version drawn up by the MCNS (Multimedia Cable Network System Partners Ltd) and IEEE 802.14 consortium, and Table 1B. In particular, the whole process of conversion from digital to analog signal, found in the physical layer in the OSI stack of Table 1A, is eliminated. The said conversion is required when coaxial cable is used as the signal transmission medium and is covered by specifications in terms of bandwidth and QAM and QPSK modulation. The present invention is applicable to the physical layer of the OSI stack and consequently forms an interface between the MAC MCNS and 802.14 layers and the optical fibre transmission medium. It is located in the layer identified as the «cable modem digital physical layer» in Table 1B.

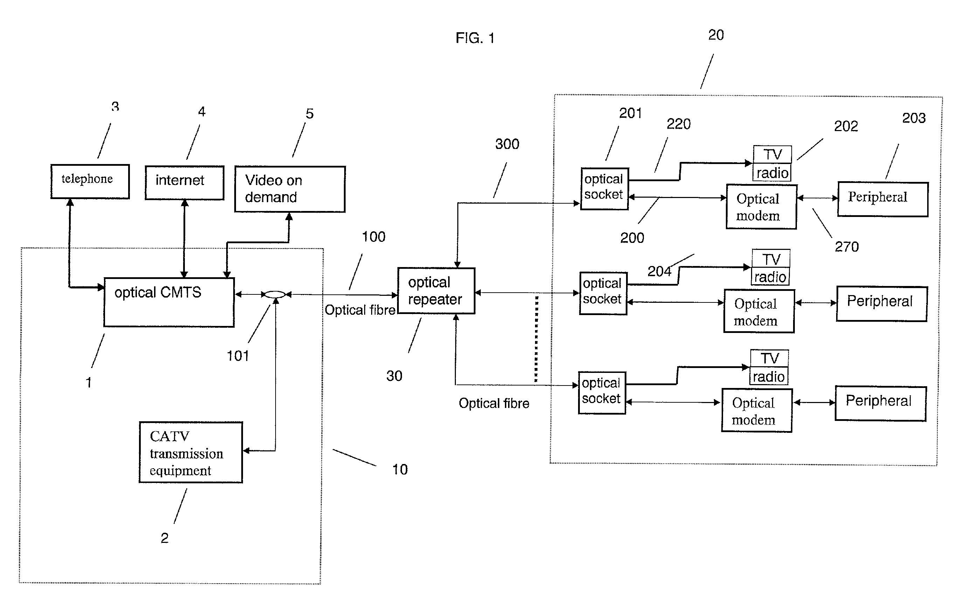

With reference to Fig. 1, a CATV network with optical fibre to the subscriber is shown schematically. The purpose of this schematic diagram is to show where the present invention is fitted. In Fig. 1, an integrated system of services such as telephone (3), Internet (4) and Video on Demand (5) is transmitted digitally by equipment called the optical CMTS (cable modem termination system) (1), in which the electronic circuit card according to the invention is included. A CATV analog AM optical signal sent from the CATV transmission equipment (2) is added optically to this digital transmission system by means of the optical coupler (101). The whole system of digital and analog transmitters is fitted within the Exchange or Head End (10). The said CATV analog AM signal is sent to the network in broadcast mode. For networks originally constructed as hybrid optical fibre/coaxial cable types, in which the optical fibre from the optical node to the home has been introduced subsequently, there is an optical repeater (30) which enables the optical signal to be carried to the subscribers' homes (20) via the optical fibre section (300). The optical socket (201) is located in the subscriber's home (20), and is provided with the coaxial outlet (220), to which the subscriber's TV and radio (202) are connected, and with the optical fibre outlet (200), to which is connected the optical cable modem (204) including the electronic circuit card according to the invention. The peripheral unit (203), which can be a personal computer, for sending and receiving the stream of digital data, is connected to the said optical cable modem via the said one or more interfaces for the CPE (customer premise equipment) unit (270).

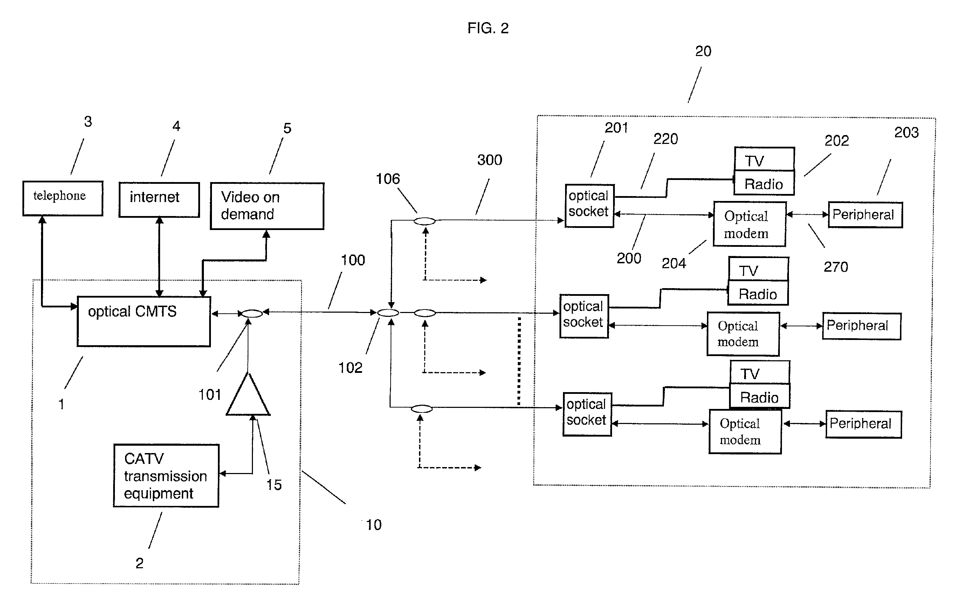

In Fig. 2, the present invention is fitted into a different type of all-optical network. In this type of tree network, the CATV AM transmitter (2) which is used is a 1550 nm CATV laser, externally modulated and amplified by the optical amplifier (15) which enables the analog AM signal to be sent without the additional use of the optical repeater (30) shown in Fig. 1. The optical couplers (102 and 106) divide the optical signal according to a tree topology, up to the subscribers' homes (20). The present invention enables the return path to be used additionally for a network having these characteristics with a tree topology originally constructed for carrying outgoing path signals only, where «outgoing path signals» denote the signals sent from the said Exchange and received by the individual subscribers and «return path» denotes the path of the signals transmitted from the subscribers' homes and arriving at the Exchange or Head End (10).

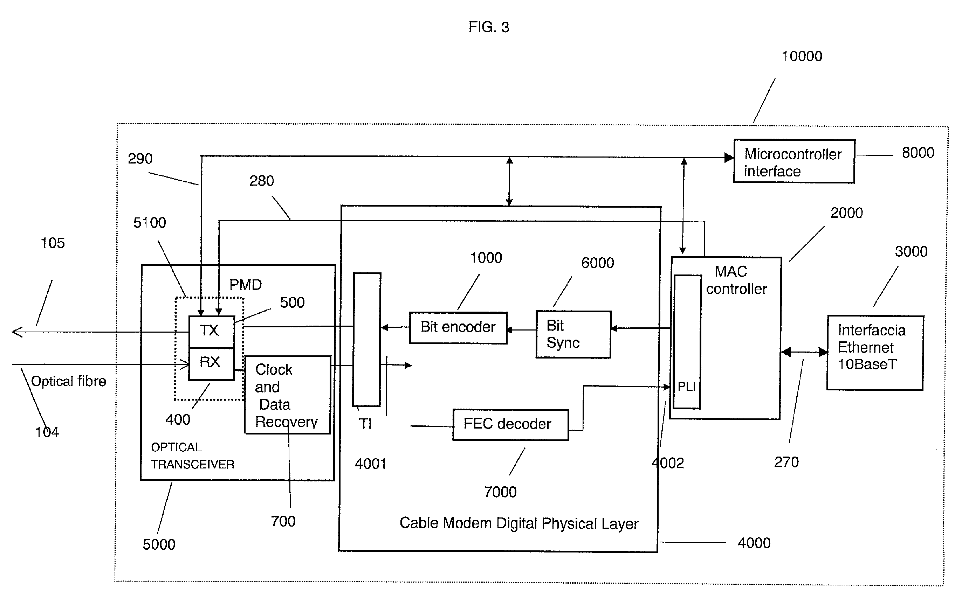

Fig. 3 is a block diagram of an embodiment of the electronic circuit card (10000) according to the invention, for the implementation of an optical cable modem (204) such as that shown schematically in Figs. 1 and 2. This card comprises an Ethernet 10BaseT interface (3000) which is connected via the 33 MHz 32 bit PCI bus (270) to the said electronic MAC controller which in the present embodiment is of the DOCSIS 1.1 type (2000). In the present embodiment, the said electronic MAC controller (2000) is the Coresma 6001 chip with a 240-pin SQFP package. The said Coresma 6001 chip is of the programmable type, and incorporates a set of 4 RISC processors which implement the MAC and higher layers. It is adaptable to various access standards, including DVB/DAVIC and MCNS/DOCSIS which is the one used in the present embodiment. The said Coresma 6001 chip also has a fully programmable interface with the physical layer. It implements the functions of framing and de-framing the protocol data units (PDUs) of the MAC and network layers, processing the upstream packet headers and filtering the upstream frames, and supports 40/56 bit DES encryption and decryption.

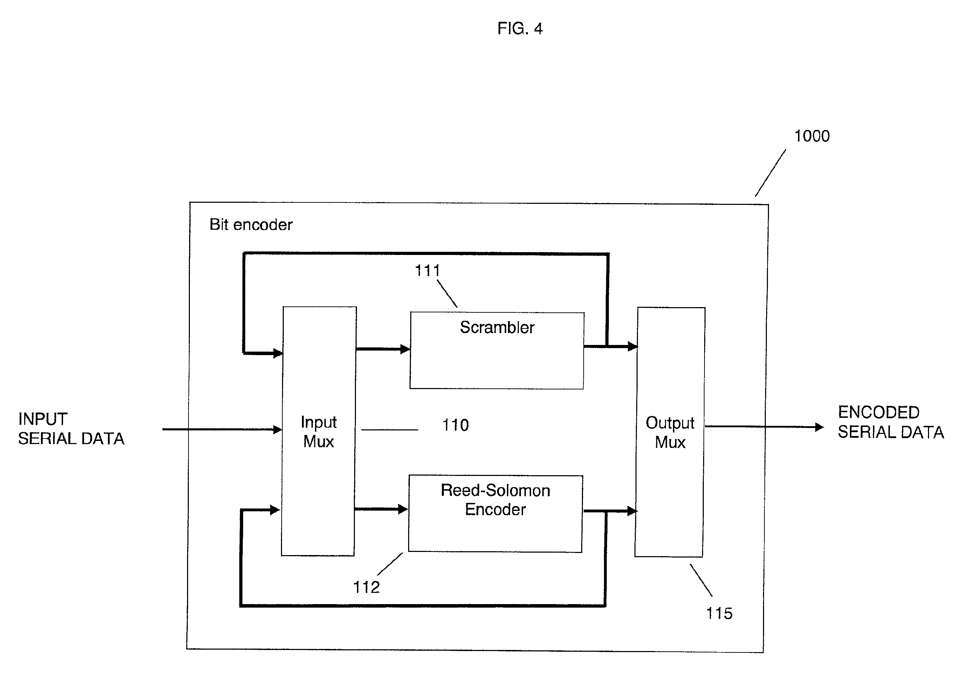

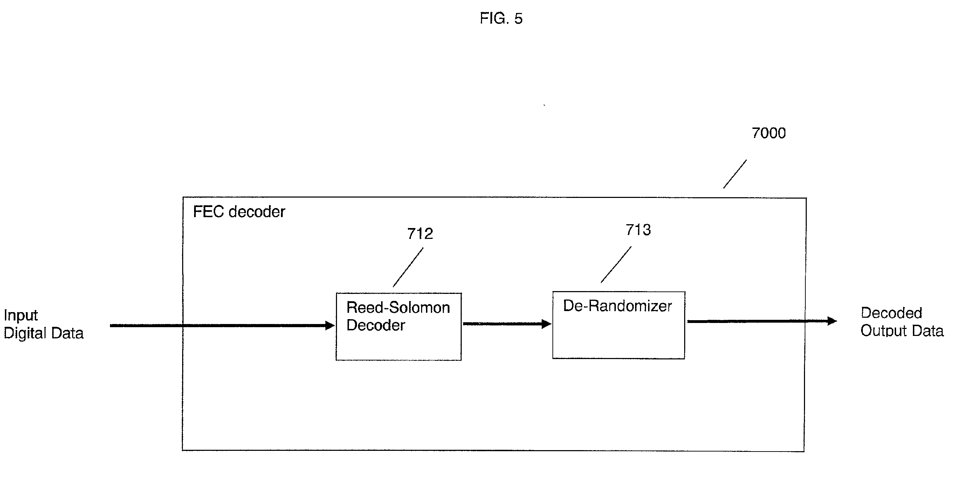

The said MAC controller (2000) is connected to the said cable modem digital physical layer (4000) via the PLI (physical layer interface) (4002), which is suitably programmed for interfacing with the controller. The said cable modem digital physical layer takes the form of a chip with a 208-pin SQFP package. It comprises a circuit called Bit Sync (6000) for synchronizing the streams of incoming bits and packet bits, the bit encoder (1000) for the coding and scrambling of the said stream of incoming bits, and a circuit called the FEC decoder for the error correction, decoding and de-scrambling of the digital signal stream received from the network. The said FEC decoder is interfaced via the said PLI (physical layer interface) (4002) with the said electronic MAC controller (2000) which has two dual-stream independent channels for receiving and transmitting data. The said bit encoder (1000) sends the stream of series bits to the optical transceiver (5000) via the transceiver interface TI (4001) which forms the interface with the optical fibre network. The said optical transceiver (5000) in the present embodiment implements the said digital optical transceiver and consists of the said PMD (physical media dependent) unit (5100) and a clock and data recovery unit (700). The said PMD unit (5100), in turn, consists of a laser transmitter (500) and an optical receiver (400). In the present embodiment, the said laser transmitter (500) implements the said optical transmitter, and is connected via the bus (280) to the said electronic MAC controller (2000) and via the bus (290) to the microprocessor interface (8000). The said microprocessor interface (8000) is used, with the aid of an external microprocessor, for programming the transmitting and receiving functions and also for programming the wavelength of the said laser transmitter (500). The optical receiver (400) is connected to the clock and data recovery unit (700) for recovering the synchronization of the bits and data packets received from the optical fibre network. Fig. 4 shows a block diagram of the said bit encoder of the present embodiment. The stream of serial digital data from the synchronizing unit identified as «Bit Sync» (6000) is sent to a multiplexer (110) identified as «Input Mux», which carries out a serial-parallel conversion and sends the data to the scrambler (111) and to the encoder (112). The scrambler (111) prevents the occurrence of large spectral components in fixed data sequences. The multiplexer (115) identified as «Output Mux» serializes the digital data stream received from the said scrambler (111) and the said encoder (112). In the present embodiment, the said encoder (112) is of the Reed-Solomon type, and, although it executes a coding which is too complicated for digital transmission, it is used in the present embodiment because it is already present in cards for QAM and QPSK burst transmitters of cable modems such as the STEL-2176 made, and this makes production of the equipment faster and makes the equipment itself compatible with commercially available hardware. Fig. 5 is a block diagram of the said FEC decoder (7000), in the present embodiment in the said cable modem digital physical layer (4000). The said FEC (forward error correction) decoder conforms to the layout found in commercially available QAM cable modem receivers, such as that in the Intel STEL-2176, of which the analog modulation and demodulation part is not used. In the present embodiment, it is a Reed-Solomon decoder (712) which can decode data blocks of the Reed-Solomon type. Each code block has a length of 128 7-bit symbols and contains 122 data symbols followed by 5 control symbols. Finally, the de-randomizer (713) acts in the opposite way to the said scrambler (111), restoring the original data sequence.

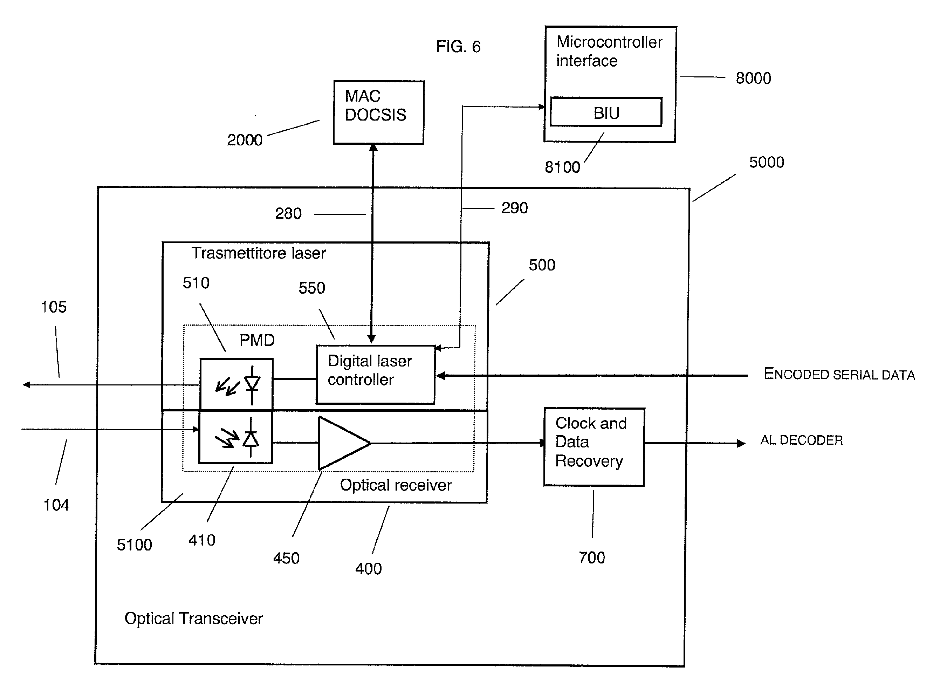

Fig. 6 shows the said optical transceiver (5000) in detail. The said laser transmitter (500) consists of a VCSEL laser (510) which implements the said optical source in the present embodiment of the said optical source controller. The said digital laser controller (DLC) (550) is connected to the electronic MAC controller (2000) via the connection (280) and to the said microprocessor interface (8000) via the connection (290) and the BIU (bus interface unit) (8100). The said digital laser controller (DLC) (550) has three functions:
1. It switches on the laser only in the presence of the timing signal which is received from the said electronic MAC controller (2000) and which corresponds to the signal to be transmitted.
2. It tunes the laser (500) to the optical wavelength on which transmission is to take place. The tuning is determined in the present embodiment by suitable programming of 9 registers of 8 bits each, which are present in the said BIU (8100) belonging to the said microprocessor interface (8000). Three 24-bit words for selecting the wavelength of the laser (500) are encoded in these registers. The said digital laser controller (550) matches each of the three words with a precise current level to be supplied to the VCSEL (500). This is because the said current level determines the internal temperature of the said VCSEL (500) and consequently the wavelength transmitted by it.
3. It stabilizes the optical output power of the said laser (500) by means of a control circuit.

The optical receiver (400) consists of a photodiode PIN (410) which converts the optical signal power striking it into current, and a transimpedance amplifier (450) which amplifies the electrical signal produced by the photodiode. The said electrical signal, of the digital type, produced by the photodiode is then regenerated by the said clock and data recovery unit (700) which also extracts the clock signal from it.

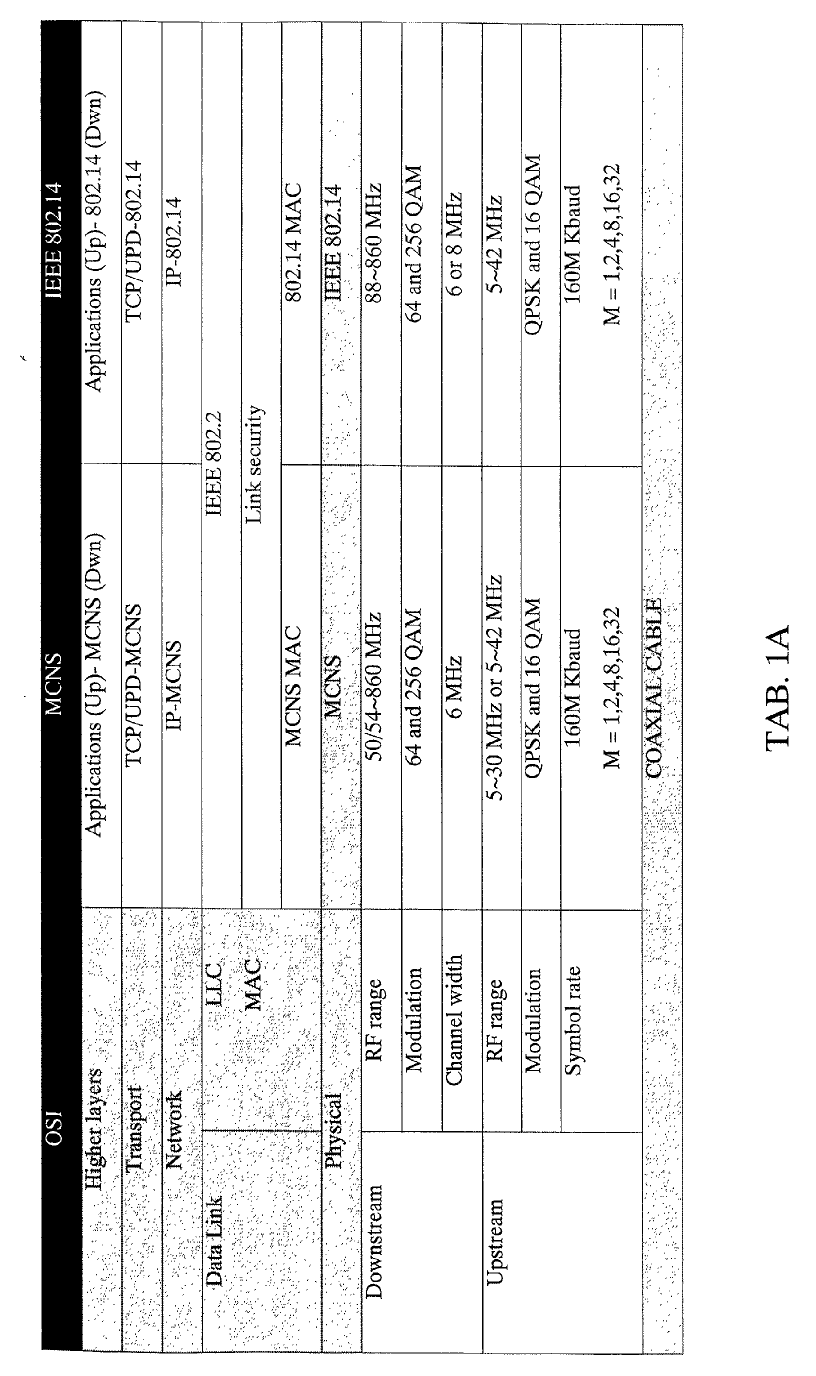

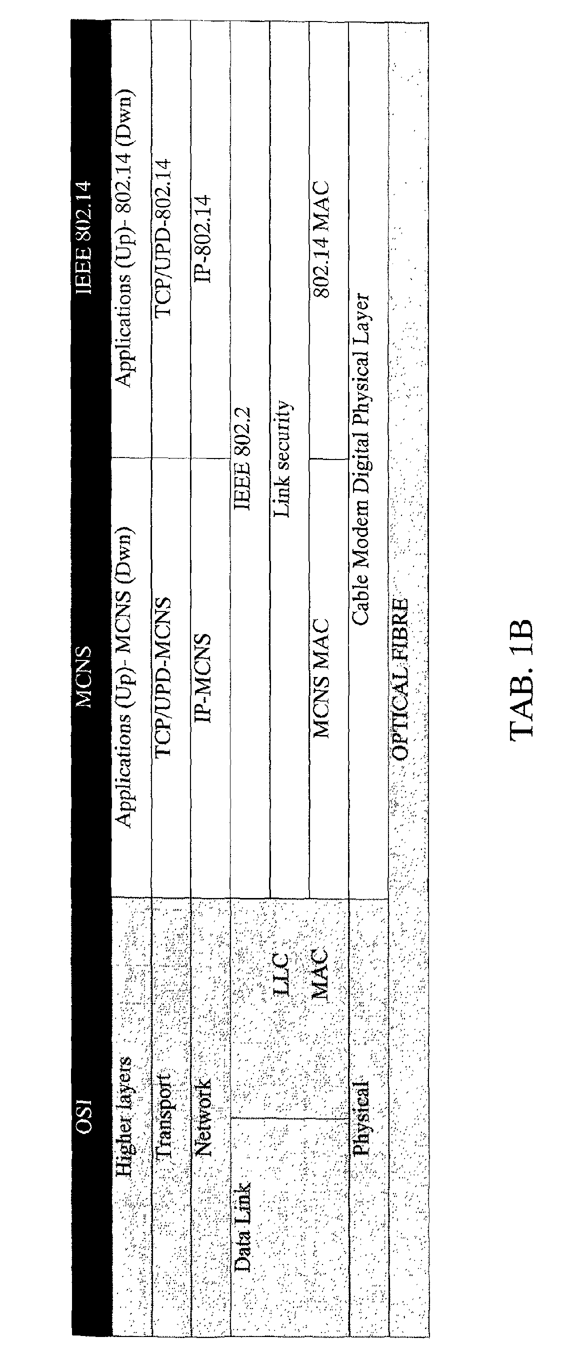

## Claims

1. An electronic circuit card comprising:
• An optical fibre input;
• An optical fibre output;
• An optical receiving system, connected to the said one optical fibre input, which converts an incoming digital optical signal received from the network to a digital electrical input signal;
• A clock and data recovery circuit;
• An electronic circuit for decoding the said digital electrical input signal;
• An electronic MAC controller consisting of a chip for managing the MAC layer of the cable modem standards for cable modems or cable modem termination systems (CMTS);
• An optical transmission system, connected to the said optical fibre output, comprising an optical source which converts into optical form a digital electrical output signal sent to the network, and an optical source controller which can regulate the power and wavelength of the optical output of the said optical source;
• An input of the said optical source controller to which a signal is transmitted in synchronization with the data transmission time slot;
• A bus which connects the said input of the said optical source controller to an output of the said electronic MAC controller from which a signal is transmitted in synchronization with the data transmission time slot;
• A circuit for synchronizing the bits and packets of bits forming the said digital electrical output signal;
• An electronic circuit for encoding the said digital electrical output signal;
• A microprocessor interface for the external programming of some functions of the electronic circuit card;
• One or more interfaces for the CPE (customer premise equipment) unit for connecting the said electronic circuit card to the user interface.
• One or more network interfaces.

2. Card according to Claim 1, **characterized by** the use of an LED (light emitting diode) as the said optical source.

3. Card according to Claim 1, **characterized by** the use of a DFB (distributed feedback) laser as the said optical source.

4. Card according to Claim 1, **characterized by** the use of a Fabry Perot laser as the said optical source.

5. Card according to Claim 1, **characterized by** the use of a VCSEL laser as the said optical source.

6. Card according to Claims 1, 2, 3, 4 and 5, **characterized in that** the said optical source is switched on only in the presence of the said data transmission time slot.

7. Card according to Claim 6, **characterized by** the said electronic circuit for encoding the said digital output signal and by the said electronic circuit for decoding the said digital electrical input signal by coding of the Manchester type.

8. Card according to Claim 6, **characterized by** the said electronic circuit for encoding the said digital output signal and by the said electronic circuit for decoding the said digital electrical input signal by coding of the 4B5B type.

9. Card according to Claim 6, **characterized by** the said electronic circuit for encoding the said digital output signal and by the said electronic circuit for decoding the said digital electrical input signal by coding of the 8B10B type.

10. Card according to Claim 6, **characterized by** the said electronic circuit for encoding the said digital output signal and by the said electronic circuit for decoding the said digital electrical input signal by coding of the Reed-Solomon type.

11. Card according to Claims 6, 7, 8 and 9 and 10, **characterized by** a laser of the tunable type used as the optical source.

12. Card according to Claim 11, **characterized in that** the said optical source is tuned to a wavelength selected by the said electronic MAC controller.

13. Card according to Claim 11, **characterized in that** the said optical source is tuned to a wavelength selected by means of the said microprocessor interface.
